# FASCICULE DE BREVET EUROPEEN

(11) **EP 1 071 336 B1**
(45) Date de publication et mention de la délivrance du brevet: **12.02.2003**
(21) Numéro de dépôt: 99914593.1
(22) Date de dépôt: 15.04.1999
(51) Int. Cl.: A21B 3/13

(54) **PROCEDE DE CUISSON DE PREPARATIONS A CUIRE AU FOUR ET MOULE POUR LA MISE EN OEUVRE DUDIT PROCEDE**
VERFAHREN ZUM BACKEN IM OFEN EINER BACKWARENZUBEREITUNG UND FORM DAFÜR
METHOD FOR COOKING PREPARATIONS TO BE OVEN-BAKED AND BAKERY PAN FOR IMPLEMENTING SAID METHOD

(30) Priorité: 16.04.1998 FR 9804762
(43) Date de publication de la demande: 31.01.2001
(73) Titulaire: Bouton-Hugues, Philippe, 45240 Marcilly en Vilette (FR)
(72) Inventeur: Bouton-Hugues, Philippe, 45240 Marcilly en Vilette (FR)
(74) Mandataire: Breese, Pierre
(86) Numéro de dépôt international: FR9900892
(87) Numéro de publication internationale: WO99053765

(56) Documents cités:
- WO-A-98/02045
- CA-A- 2 043 230
- DE-U- 9 101 404
- FR-A- 2 643 304
- US-A- 2 015 097
- US-A- 2 411 857
- US-A- 3 128 725
- US-A- 3 924 013
- US-A- 4 847 184
- US-A- 5 453 287

## Description

La présente invention concerne le domaine de la préparation culinaire, notamment de la pâtisserie, et de la boulangerie.

Il est habituel, dans l'état de la technique, de procéder à la cuisson de préparations à cuire au four, notamment de tartes, de pain, de galettes, pizzas ou de pâtés, à l'aide de moules en métal ou en terre cuite.

Dans la boulangerie industrielle, il est également connu de cuire des tartes en les cerclant avec une tôle métallique comportant un système de verrouillage permettant l'expansion en fin de cuisson, pour le retrait du moule.

Ces différentes solutions imposent toutes une opération ultérieure de nettoyage du moule. Par ailleurs, le moule doit généralement être retiré après cuisson afin que la présentation soit agréable, et aussi pour éviter d'immobiliser le moule.

On a également proposé dans l'art antérieur de réaliser des conditionnements et des emballages en bois pour des articles culinaires. On a proposé dans le brevet US3128725 un emballage en bois pour des gâteaux. On a également proposé de réaliser des articles de cuisson en bois, formés de boîtes présentant des faces latérales et un fond. De tels articles de cuisson sont décrit dans les brevets américain US2411857, US5453287 ou US3924013, dans les brevets PCT WO9802045, ou canadien CA2043230, dans le modèle d'utilité allemand G9101404. Ces articles présentent tous l'inconvénient d'un démoulage difficile et d'un prix de revient élevé, car ils comportent un fond et des bords latéraux qu'il convient d'assembler par pliage ou par agrafage.

A cet effet, l'invention concerne dans son acception la plus générale un procédé de cuisson conforme à la revendication 1.

L'invention sera mieux comprise à la lecture de la description qui suit, se référant aux dessins annexés où :
- la figure 1 représente une vue d'une application de l'invention ;
- la figure 2 représente une vue en coupe d'une exemple de moule selon l'invention ;
- la figure 3 représente une vue de face d'une exemple de moule selon l'invention ;
- la figure 4 représente une vue schématique d'un équipement pour la fabrication d'un tel moule.

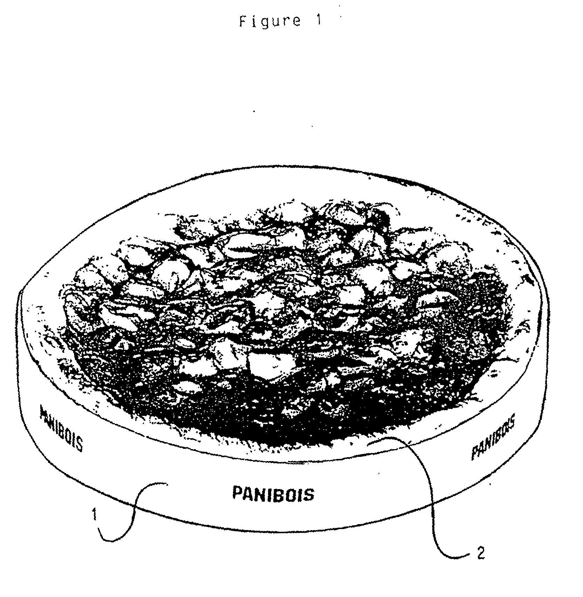

La figure 1 représente une vue d'une tarte cuite selon le procédé de l'invention.

La pâte à tarte est entourée, avant cuisson, par une feuille de bois déroulé (1) formant avant et pendant la cuisson le moule de cuisson, et formant ensuite un moule décoratif qui peut être laissé en place autour de la tarte (2), notamment pour éviter qu'elle ne s'abîme lors du transport.

La feuille de bois mince est par exemple une feuille de peuplier déroulée d'une épaisseur d'environ 1 millimètre, d'une hauteur d'environ 50 millimètres et d'une longueur d'environ 1 mètre. L'épaisseur est comprise de préférence entre 1 et 2 mm, avantageusement entre 1,2 et 1,8 mm.

Les deux extrémités de cette feuille sont raccordées par une colle, de préférence une colle cyanoacrilate, sur une longueur d'environ 50 millimètres.

Pour des moules destinés à des températures de cuisson supérieures à 180°C, il est avantageux de déposer simultanément une deuxième colle polymérisable à des températures supérieures à 150°C, ou une colle époxy.

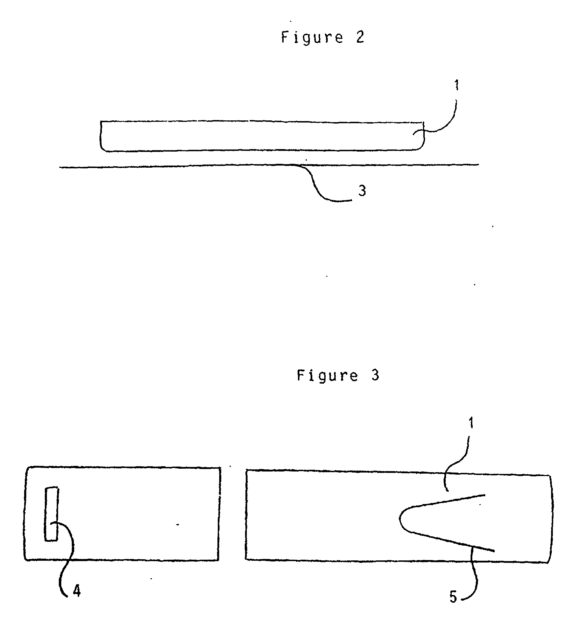

La cuisson s'effectue avantageusement, comme représenté en figure 2, sur une tôle métallique (3) sur laquelle est posée la pâte ou la préparation à cuire.

Éventuellement, une feuille de papier sulfurisé évite l'adhésion de la pâte sur la tôle. L'ensemble ainsi préparé est ensuite mis en cuisson dans le four.

La figure 3 représente une variante de réalisation. L'une des extrémités de la bande de bois mince présente une fente (4) dont la largeur correspond à celle d'une languette (5) prévue à l'extrémité opposée de la bande de bois mince (1).

Le moule peut ainsi être commercialisé et stocké sous forme de paquet de bandes linéaires. Au moment de l'utilisation, on replie la bande de bois mince et on introduit la languette (5) dans la fente (4).

La bande forme alors le moule de cuisson de forme sensiblement cylindrique.

Il peut être retiré facilement en exerçant une traction sur l'extrémité de la bande munie de la languette (5), jusqu'à ce qu'elle se désaccouple de la fente (4).

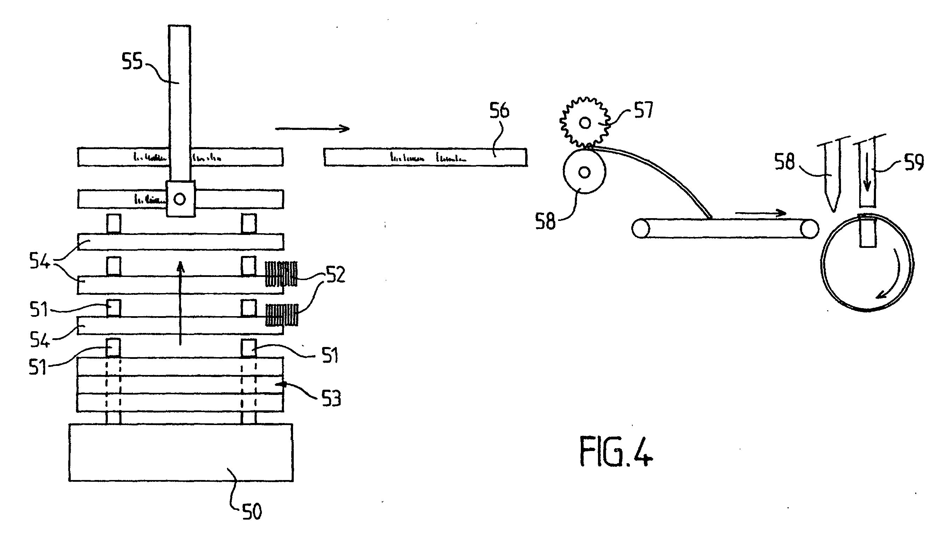

La figure 4 représente une vue schématique d'un équipement pour la fabrication industrielle de tels moules. Il comprend un distributeur (50) délivrant des lames de bois minces sur un transporteur (53) comprenant des bandes latérales motorisées munies de taquets (51). Ces taquets sont écartés selon un intervalle correspondant supérieur à la largeur d'une bande de bois déroulé. Un ou plusieurs pinceaux (52) disposés au-dessus des bandes motorisées maintiennent les bandes de bois (54) appuyées contre les taquets (51). Un poste de gravure comprenant un laser (55) assure le marquage de chacun des bandes défilant sous ce poste. Les lames (56) sont ensuite entraînées par un deuxième transporteur vers un poste d'écrasement comprenant un rouleau cranté (57) et un rouleau d'appui lisse (58). Ce poste assure l'écrasement des fibres orientées longitudinalement. La bande de bois ainsi préparée est ensuite entraînée vers un poste de formage comprenant une tête d'encollage (58) déposant un point ou une ligne de colle sur une zone d'extrémité de la bande de bois. La bande de bois est alors entraînée en rotation sur une formeuse. Lorsque la zone encollée vient en superposition avec l'extrémité arrière de la bande de bois, un organe de pression (59) vient presser les deux zones en contact pour achever le collage.

## Revendications

1. Procédé de cuisson de préparations à cuire au four, notamment de tartes, de pain, de galettes ou de pâtés, **caractérisé en ce qu'**il comporte une première étape consistant à déposer la préparation à cuire sur une tôle métallique de cuisson (3) et une deuxième étape consistant à entourer ladite préparation posée sur la tôle de cuisson avec une feuille de bois mince sans fond, et une troisième étape de cuisson de la préparation entourée par ladite feuille de bois mince sans fond.

2. Procédé de cuisson de préparations à cuire au four, notamment de tartes, de pain, de galettes ou de pâtés selon la revendication 1 **caractérisé en ce que** la préparation à cuire est déposée sur une tôle de cuisson avant d'être entourée par ladite feuille de bois mince sans fond.

3. Procédé de cuisson de préparations à cuire au four, notamment de tartes, de pain, de galettes ou de pâtés selon la revendication 1 **caractérisé en ce que** la première étape consiste à déposer la préparation à cuire sur une feuille de papier de cuisson ou une couche de matière grasse étalée sur la tôle de cuisson.

4. Procédé de cuisson de préparations à cuire au four, notamment de tartes, de pain, de galettes ou de pâtés selon la revendication 1 **caractérisé en ce qu'**il comporte une étape initiale de réalisation d'un moule constitué par une feuille de bois mince dont les fibres sont orientées longitudinalement et dont la largeur correspond sensiblement à la hauteur de la préparation, et la longueur correspond sensiblement au périmètre de la préparation dépourvu de fond, les extrémités de la feuille de bois mince étant raccordées par collage avec une combinaison de colles comprenant une colle cyanoacrylate et une colle polymérisable à température supérieure de 150°C.

5. Procédé de cuisson de préparations à cuire au four, notamment de tartes, de pain, de galettes ou de pâtés selon la revendication 4 **caractérisé en ce que** les extrémités de la feuille de bois mince sont raccordées par collage avec une combinaison de colles comprenant une colle cyanoacrylate et une colle epoxy.

6. Procédé de cuisson de préparations à cuire au four, notamment de tartes, de pain, de galettes ou de pâtés selon la revendication 4 ou 5 **caractérisé en ce qu'**il comporte une étape de marquage de la feuille en bois par gravure laser.

## Claims

1. Process for baking preparations in an oven, notably tarts, bread, cakes or pastries, **characterized in that** it comprises a first step consisting of putting the preparation to be cooked on the metal cooking plate (3) and a second step consisting of surrounding the said preparation set on the metal cooking plate with a slim sheet of wood without a base, and a third step of cooking the preparation surrounded by the said slim sheet of wood without a base.

2. Process for baking preparations in an oven, notably tarts, bread, cakes or pastries according to claim 1, **characterized in that** the preparation to be baked is set on a cooking plate before being surrounded by the said slim sheet of wood without a base.

3. Process for baking preparations in an oven, notably tarts, bread, cakes or pastries according to claim 1, **characterized in that** the first step consists of setting the preparation to be baked on a sheet of baking paper or a layer of fatty material spread on the cooking plate.

4. Process for baking preparations in an oven, notably tarts, bread, cakes or pastries according to claim 1, **characterized in that** it comprises an initial step of the production of a mould consisting of a slim sheet of wood of which the grain is oriented longitudinally and of which the size noticeably corresponds to the height of the preparation and the length noticeably corresponds to the perimeter of the preparation devoid of a base, the extremities of the slim sheet of wood being attached by gluing with a combination of glues including a cyanoacrylate glue and a glue that is polymerised at a temperature over 150°C.

5. Process for baking preparations in an oven, notably tarts, bread, cakes or pastries according to claim 4, **characterized in that** the extremities of the slim sheet of wood are attached by gluing with a combination of glues including a cyanoacrylate glue and an epoxy glue.

6. Process for baking preparations in an oven, notably tarts, bread, cakes or pastries according to claim 4 or 5, **characterized in that** it comprises a step of marking the sheet of wood with an engraving laser.

## Patentansprüche

1. Garverfahren von Zubereitungen, die im Ofen gegart werden wie im besonderen die von Obstkuchen, Brot, Blätterteigkuchen oder Pasteten, **dadurch gekennzeichnet, dass** der erste Schritt darin besteht, dass die zu garende Zubereitung auf ein Metall-Backblech (3) gelegt wird und dass der zweite Schritt darin besteht, dass die sogenannte sich auf dem Backblech befindende Zubereitung mit einem dünnen Holzblatt ohne Boden umlegt wird und der dritte Schritt aus dem Garen der mit dem sogenannten dünnen Holzblatt umlegten Zubereitung besteht.

2. Garverfahren von Zubereitungen, die im Ofen gegart werden wie im besonderen die von Obstkuchen, Brot, Blätterteigkuchen oder Pasteten gemäss Anspruch 1, **dadurch gekennzeichnet, dass** die zu garende Zubereitung auf ein Backblech gelegt wird bevor sie mit dem sogenannten dünnen Holzblatt ohne Boden umlegt wird.

3. Garverfahren von Zubereitungen, die im Ofen gegart werden wie im besonderen die von Obstkuchen, Brot, Blätterteigkuchen oder Pasteten gemäss Anspruch 1, **dadurch gekennzeichnet, dass** der erste Schritt darin besteht, dass die zu garende Zubereitung auf ein Blatt Backpapier gelegt wird oder eine Fettschicht auf das Backblech aufgebracht wird.

4. Garverfahren von Zubereitungen, die im Ofen gegart werden wie im besonderen die von Obstkuchen, Brot, Blätterteigkuchen oder Pasteten gemäss Anspruch 1, **dadurch gekennzeichnet, dass** der erste Schritt der Herstellung darin besteht, eine Form aus einem dünnen Holzblatt herzustellen, dessen Fasern in Längsrichtung ausgerichtet sind und dessen Breite genau mit der Höhe der Zubereitung übereinstimmt, und dessen Länge exakt mit dem Umfang der Zubereitung ohne Boden übereinstimmt, die Enden des dünnen Holzblattes durch Kleben miteinander verbunden werden und zwar mit einer Mischung aus Cyanacrylat-Klebstoff und einem Klebstoff, der bei einer Temperatur von über 150°C polymerisiert.

5. Garverfahren von Zubereitungen, die im Ofen gegart werden wie im besonderen die von Obstkuchen, Brot, Blätterteigkuchen oder Pasteten gemäss Patentanspruch 4, **dadurch gekennzeichnet, dass** die Enden des dünnen Holzblattes durch Kleben mit einer Mischung aus Cyanacrylat- und einem Epoxyklebstoff verbunden werden.

6. Garverfahren von Zubereitungen, die im Ofen gegart werden wie im besonderen die von Obstkuchen, Brot, Blätterteigkuchen oder Pasteten gemäss Patentanspruch 4 oder 5, **dadurch gekennzeichnet, dass** ein Schritt für die Markierung des Holzblattes mittels Lasergravur vorgesehen wird.
